# EUROPEAN PATENT APPLICATION

(11) **EP 4 622 124 A1**
(43) Date of publication of application: **24.09.2025**
(21) Application number: 25163789.8
(22) Date of filing: 14.03.2025
(51) Int. Cl.: H04B 1/08, A45F 5/00, H04B 1/3827

(54) **MODULARIZED WIRELESS SIGNAL RECEIVER AND WIRELESS TRANSMISSION SYSTEM**

(30) Priority: 20.03.2024 TW 113110276
(71) Applicant: Cooler Master Technology Inc., Tapei City 114065 (TW)
(72) Inventor: CHEN, Chun-Ta, 114065 Taipei City (TW); SHIAO, Yao, 114065 Taipei City (TW); LEE, Shang-Che, 114065 Taipei City (TW); LIEN, Ming-Wan, 114065 Taipei City (TW)
(74) Representative: Grünecker Patent- und Rechtsanwälte PartG mbB

(57) **Abstract**

A modularized wireless signal receiver includes a plurality of function modules. Each of the function modules is detachably connected another one of the function modules through a transmission line set. The function modules include: an application module, a main control module and a battery module. The main control module includes a wireless communication element electrically coupled to the application module. The wireless communication element is configured to receive a wireless signal and control an operation of the application module accordingly. The battery module includes a battery, and the battery module is electrically coupled to the application module and the main control module. The battery module is configured to provide power to the application module and the main control module.

## Description

### BACKGROUND

This disclosure relates to a modularized wireless signal receiver and a wireless transmission system.

In large events such as concerts, participants often carry items such glow sticks to enhance the atmosphere by, for example, waving them. Additionally, event organizers may distribute wearable glowing items such as wristbands for participants to wear during the event.

However, conventional devices such as aforementioned glow sticks and wristbands have only a single lighting function and cannot be used in different ways as the event progresses. Moreover, when such a device malfunctions, it can only be discarded, leading to wasted resources and high usage costs.

### SUMMARY

In view of the above, this disclosure provides a modularized wireless signal receiver and a wireless transmission system, which have fewer drawbacks of the conventional devices and systems.

The invention is as as defined in the appended claims. According to an aspect of this disclosure, a modularized wireless signal receiver comprises multiple functional modules, each of which is detachably connected to another via a transmission line set. The functional modules include an application module, a main control module, and a battery module. The main control module includes a wireless communication element that is electrically coupled to the application module and is configured to receive wireless signals and control the application module's operation. The battery module contains a battery that is electrically coupled to the application module and the main control module to supply power to them.

According to another aspect of this disclosure, the wireless transmission system includes a transmitter and the modularized wireless signal receiver described above. The transmitter includes a microcontroller and a wireless communication element, and these two are electrically coupled to each other. The wireless communication element of the main control module of the modularized wireless signal receiver is in communication with the wireless communication element of the transmitter.

Thus, the modularized wireless signal receiver according to one or more aspects of this disclosure comprises replaceable functional modules, allowing for different applications and higher adaptability. When a functional module malfunctions, only the faulty module needs to be replaced, reducing maintenance costs. Additionally, the wireless transmission system enables the transmitter to broadcast wireless signals to each functional module of the modularized wireless signal receiver, allowing simultaneous reception as well as control over the application modules via the main control module based on the wireless signals, thereby enhancing the participants' experience.

### BRIEF DESCRIPTION OF THE DRAWINGS

Aspects of the present disclosure are understood from the following detailed description when read with the accompanying figures. It is noted that, in accordance with the standard practice in the industry, various features are not necessarily drawn to scale. In fact, the dimensions of the various features may be increased or reduced for clarity of discussion.
Figure 1 is a block diagram of a modularized wireless signal receiver according to one aspect of this disclosure.
Figure 2 is a block diagram of a modularized wireless signal receiver according to another aspect of this disclosure.
Figure 3 is a schematic diagram of a modularized wireless signal receiver according to one aspect of this disclosure.
Figure 4 is a block diagram of a modularized wireless signal receiver according to yet another aspect of this disclosure.
Figure 5 is a block diagram of a wireless transmission system according to one aspect of this disclosure.

Reference labels in the drawings:
1, 2, 3, 4, 6: Modularized Wireless Signal Receiver
11, 31, 41: Application Module
12, 32, 42: Main Control Module
13, 23, 33, 43: Battery Module
21: First Functional Module
22: Second Functional Module
410, 420, 430: Housing
411: Light-emitter
412: Microcontroller
413: Vibrator
121, 421: Wireless Communication Element
422: DC/DC Converter
131, 431: Battery
432: Booster
5: Transmitter
51: Wireless Communication Element
52: Microcontroller
53: Input/Output Module
TL0, TL1, TL2, TL3: Transmission Line Set
TL01, TL11, TL21, TL31: Power Line
TL02, TL03, TL12, TL13, TL22, TL23, TL32, TL33: Application Control Line
TL04, TL14, TL24, TL34: Ground Line
T1: First Endpoint
T2: Second Endpoint

### DETAILED DESCRIPTION

The following disclosure provides different embodiments, or examples, for implementing different aspects of the disclosed subject matter. Specific examples of components and arrangements are described in the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

The modularized wireless signal receiver described in the following embodiments can be used in events such as concerts, sport games, nightclubs, and interactive games, where each participant can wear the device, which emits one or more prompt signals as controlled. For example, if the prompt signal is a light signal, the device can emit light of a specified color or remain off as controlled.

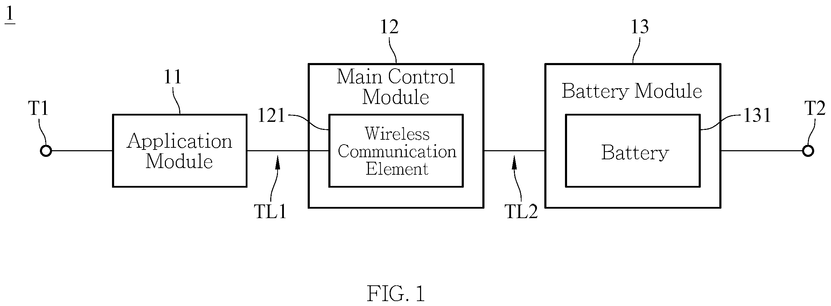

Refer to Figure 1, a block diagram of the modularized wireless signal receiver 1 according to one aspect of this disclosure. The device includes multiple functional modules, each detachably connected to another via a transmission line set. As shown in Figure 1, the functional modules of the device include an application module 11, a main control module 12, and a battery module 13. Figure 1 schematically shows one application module 11, one main control module 12, and one battery module 13, but there can be one or more modules of each type.

The application module 11 in some examples includes one or more light-emitters and/or vibrators that can emit light and/or vibrate as controlled. The application module 11 is detachably connected to the main control module 12 via the first transmission line set TL1, and the main control module 12 is detachably connected to the battery module 13 via the second transmission line set TL2. Each transmission line set has male and female connectors, with one functional module having one type of connector and the other functional module having the other type. Additionally, each transmission line set has male and female connector locks, allowing for detachable connections between functional modules.

Each transmission line set TL1 and TL2 in certain embodiments includes multiple connecting wires for transmitting power and/or control signals. The first endpoint T1 of the application module 11, not connected to the main control module 12, can be detachably connected to the battery module 13 or another functional module via a transmission line set. Similarly, the second endpoint T2 of the battery module 13, not connected to the main control module 12, can be detachably connected to the application module 11 or another functional module via a transmission line set. Each transmission line set can have multiple terminals for connecting to another module. The connection order of the application module 11, main control module 12, and battery module 13 shown in Figure 1 is only an example and can be rearranged.

The main control module 12 in this example includes a wireless communication element 121 electrically coupled to the application module 11. In one embodiment, the battery module 13 is connected between the application module 11 and the main control module 12, with the wireless communication element 121 electrically coupled to the application module 11 through the connection between the first endpoint T1 and the second endpoint T2. The wireless communication element 121 is configured to receive wireless signals and to control the operation of the application module 11. For example, the wireless communication element 121 in this example is a radio, such as a radio frequency (RF) system on a chip (SoC) for receiving RF wireless signals, and the RF may be at 2.4 GHz. However, the wireless communication element 121 is not limited to RF or a specific frequency range. In another example, the wireless communication element 121 may include an RF antenna and a central processing unit (CPU) for receiving wireless signals and controlling the application module 11 based on those signals.

The battery module 13 in this example includes a battery 131 electrically coupled to the application module 11 and the main control module 12 to supply power to those modules. Each functional module may have circuit boards with similar designs, featuring power input and output terminals for receiving and transmitting power from the battery 131 through transmission line sets. For example, the application module 11 may have a first circuit board, the main control module 12 may have a second circuit board, and the battery power can be transmitted to these modules via the transmission line sets. Functional modules not directly connected to the battery module 13 can receive power through the transmission line sets and their internal circuit boards. The battery 131 can be a 14500 battery, but this is not limiting.

In the embodiment in Figure 1, the replaceable functional modules allow the modularized wireless signal receiver to have different applications and higher adaptability. When a functional module malfunctions, only the faulty module needs to be replaced, reducing maintenance costs.

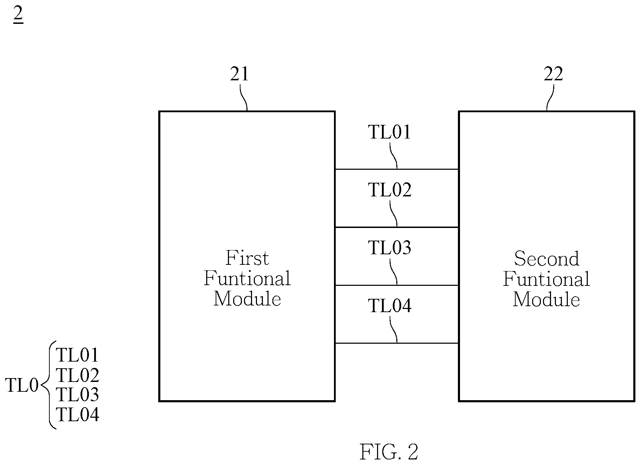

Refer to Figure 2, a block diagram of another embodiment of the modularized wireless signal receiver 2. Figure 2 shows a first functional module 21 and a second functional module 22, which can be application modules, main control modules, or battery modules as described in Figure 1. These modules are detachably connected to each other via a transmission line set TL0, which includes a power line TL01, multiple application control lines TL02 and TL03, and a ground line TL04. The transmission line set TL0 can be used to implement the transmission line sets described in one or more embodiments.

For example, the main control module can be electrically coupled to the application module through at least one of the application control lines, and the battery module can be electrically coupled to the main control and application modules through the power line.

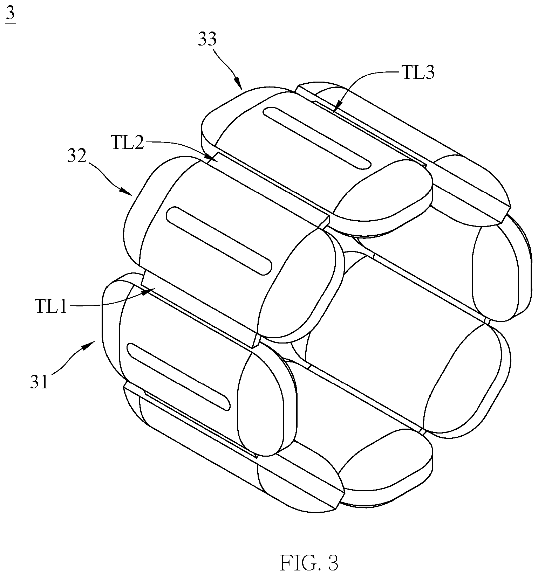

Refer to Figure 3, a schematic diagram of the modularized wireless signal receiver 3 according to one aspect of this disclosure. Figure 3 illustrates the device in the form of a wristband, but it can also be implemented as a finger light or other forms. The device includes multiple application modules 31, a main control module 32, and a battery module 33. The application modules 31 are detachably connected to the main control module 32 and adjacent application modules 31 via transmission line sets TL1, TL2, and TL3. The battery module 33 is also detachably connected to adjacent application modules 31.

As shown in Figure 3, each functional module is detachably connected to adjacent modules via transmission line sets, and application modules directly connected to the battery module 33 can transmit power to other application modules not directly connected to the battery module 33.

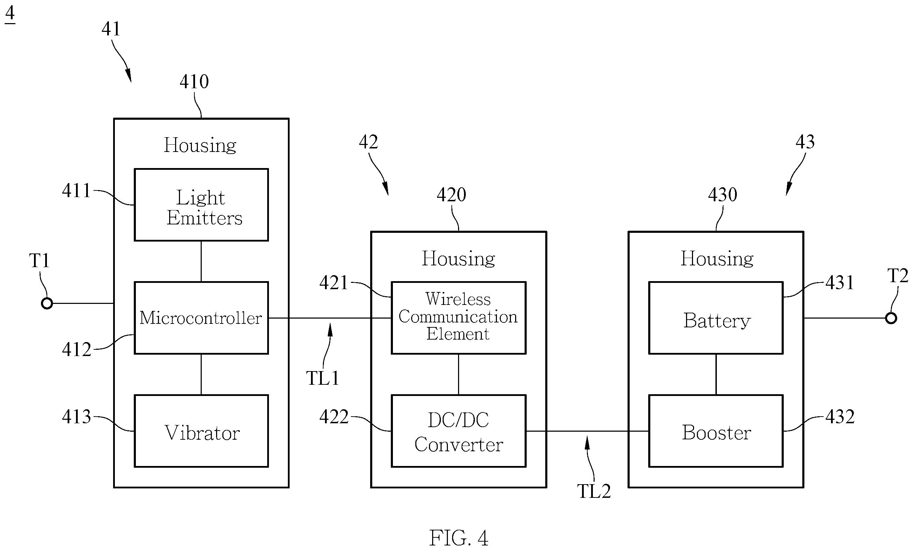

Refer to Figure 4, a block diagram of another embodiment of the modularized wireless signal receiver 4. The device includes an application module 41, a main control module 42, and a battery module 43. The application module 41 is detachably connected to the main control module 42 via the first transmission line set TL1, and the main control module 42 is detachably connected to the battery module 43 via the second transmission line set TL2. The first endpoint T1 and the second endpoint T2 can be connected to other functional modules or the battery module 43 via transmission line sets. The implementation of TL1 and TL2 can be similar to those described in Figures 1 and 2.

The application module 41 in this example includes a housing 410, one or more light-emitters 411, a microcontroller 412, and vibrator 413. The light-emitters 411 and vibrator 413 are prompt elements and can be included in varying numbers. The light-emitters 411 can be addressable RGB (ARGB) elements, such as addressable light-emitting diodes (LEDs). The light-emitters 411, vibrators 413, and microcontroller 412 are housed within the housing 410.

As shown in Figure 4, the light-emitters 411 and vibrator 413 are electrically coupled to the main control module 42 through the microcontroller 412, which controls their operation based on signals from the main control module 42. In another embodiment, the application module 41 may not include a microcontroller 412, with the light-emitting and vibrators directly controlled by the main control module 42 via application control lines.

The main control module 42 in this example includes a housing 420, a wireless communication element 421, and a DC/DC converter 422, both housed within the housing 420. The wireless communication element 421 can be similar to the element 121 described in Figure 1 and is electrically coupled to the battery module 43 through the DC/DC converter 422 and the application module 41 through the wireless communication element 421.

The wireless signal received by the wireless communication element 421 can include data packets, which the element 421 parses to obtain multiple data frames and control the application module 41 based on these frames. For example, the wireless communication element 421 can directly control the light-emitters 411 and vibrators 413 or output control signals to the microcontroller 412 for further control.

The battery module 43 includes a housing 430, a battery 431, and a booster 432, both housed within the housing 430. The battery 431 can be similar to the battery 131 described in Figure 1. The booster 432 is connected to the battery 431 and the application module 41 and main control module 42 through transmission line sets. The booster 432 may include a boost converter for increasing the voltage of the power from the battery 431.

The housings 410, 420, and 430 can have identical sizes and shapes, reducing unnecessary waste and construction costs of the modularized wireless signal receiver.

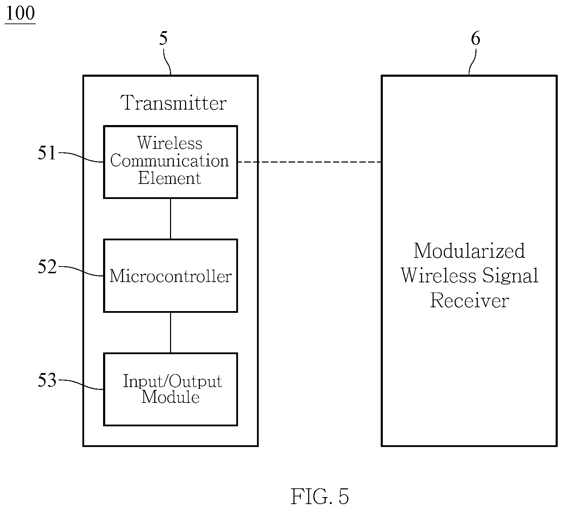

Refer to Figure 5, a block diagram of the wireless transmission system according to one aspect of this disclosure. The system 100 includes a transmitter 5 and a modularized wireless signal receiver 6, which can be implemented according to any of the embodiments described in Figures 1 to 4.

The transmitter 5 includes a wireless communication element 51, a microcontroller 52, and optionally an input/output module 53. The wireless communication element 51 is in communication with the wireless communication element of the main control module of the modularized wireless signal receiver 6.

The wireless communication element 51 includes an RF antenna and a digital signal processor (DSP). The microcontroller 52 generates data to be output, and the wireless communication element 51 of the transmitter 5 outputs control packets to the main control module of the modularized wireless signal receiver 6 based on this data. In one example, the wireless communication element 51 is a radio, such as a radio frequency system on a chip for transmitting RF wireless signals, and the RF may be at 2.4 GHz. However, the wireless communication element 121 is not limited to RF or a specific frequency range of GHz.

The input/output module 53 can be a standard communication control interface (such as an Ethernet RJ45 connector), buttons, sliders, and/or screens for receiving user instructions. The wireless communication element 51 of the transmitter 5 then outputs control packets to the main control module of the modularized wireless signal receiver 6 based on these instructions.

In summary, the modularized wireless signal receiver according to one or more aspects of this disclosure comprises replaceable functional modules for different applications and higher adaptability. When a functional module malfunctions, only the faulty module needs to be replaced, reducing maintenance costs. Additionally, the identical size and shape of each functional module's housing reduce waste and construction costs. The wireless transmission system allows the transmitter to broadcast wireless signals to each functional module, enhancing the participants' experience.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

## Claims

1. A modularized wireless signal receiver (1), comprising:
a plurality of functional modules, each detachably connected to another via a respective transmission line set (TL1), the plurality of functional modules including:
an application module (11);
a main control module (12), comprising a wireless communication element (121) electrically coupled to the application module (11), being adapted to receive a wireless signal, and controlling the application module's operation at least in part according to the received wireless signal; and
a battery module (13), including a battery (131) electrically connected to the application module (11) and the main control module (12) to supply power to the application module (11) and the main control module (12).

2. The device of claim 1, wherein the transmission line set (TLO) comprises:
a power line (TL01);
a ground line (TL04); and
multiple application control lines (TL02, TL03),
wherein the main control module (12) is electrically connected to the application module (11) through at least one of the application control lines (TL02, TL03), and the battery module (13) is electrically connected to the application module (11) and the main control module (12) through the power line (TL01).

3. The device of claim 1 or 2, wherein the main control module (12) further comprises:
a housing (420) enclosing the wireless communication element (121); and
a DC/DC converter (422) enclosed in the housing (420) and electrically connected to the battery module (13) and the wireless communication element (121).

4. The device of one of claims 1 to 3, wherein the wireless signal comprises a data packet, and the wireless communication element (121) is adapted to parse the data packet to obtain multiple data frames and control the application module's operation based on the frames.

5. The device of one of claims 1 to 4, wherein the application module (11) comprises:
a housing (410); and
at least one prompt element within the housing (410), electrically connected to the main control module (12).

6. The device of claim 5, wherein the application module (11) further comprises:
a microcontroller (412) enclosed in the housing (410),
wherein the at least one prompt element is electrically connected to the main control module (12) through the microcontroller (412).

7. The device of claim 5 or 6, wherein the at least one prompt element includes at least one of a light-emitter (411) and a vibrator (413).

8. The device of one of claims 1 to 7, wherein the battery module (13) further comprises:
a housing (430) enclosing the battery (131); and
a booster (432) within the housing (430) electrically coupled to the battery (131), and
electrically connected to the application module (11) and the main control module (12).

9. A wireless transmission system (100), comprising:
a transmitter (5) including a microcontroller (52) and a wireless communication element (51) electrically connected to the microcontroller (52); and
a modularized wireless signal receiver (6), comprising a plurality of functional modules, each detachably connected to another via a respective transmission line set (TL1), the plurality of functional modules including:
an application module (11);
a main control module (12), comprising a wireless communication element (121) electrically coupled to the application module (11) and adapted to receive a wireless signal and controlling the application module's operation at least in part according to the received wireless signal; and
a battery module (13), including a battery (131) electrically connected to the application module (11) and the main control module (12) to supply power to the application module (11) and the main control module (12),
wherein the wireless communication element (121) of the main control module (12) is adapted to communicate with the wireless communication element (51) of the transmitter (5).

10. The system of claim 9, wherein the microcontroller (52) in the transmitter (5) is adapted to generate data, and the wireless communication element (51) of the transmitter (5) is used to output a control packet to the main control module (12) based on the data generated by the microcontroller (52) in the transmitter (5).

11. The system of claim 9 or 10, wherein the transmitter (5) further comprises an input/output module (53) connected to the microcontroller (52), the input/output module (53) including a user interface adapted to receive user instructions, and the wireless communication element (51) of the transmitter (5) is adapted to output a control packet to the main control module (12) based on the user instructions.

12. A wireless transmission system (100), comprising:
a plurality of modularized wireless signal receivers (1), each comprising a plurality of functional modules, each detachably connected to another via a respective transmission line set (TL1), each of the plurality of functional modules including:
an application module (11) comprising a light emitter (411) or vibrator (413);
a main control module (12), comprising a wireless communication element (121) comprising a radio electrically coupled to the application module (11) and adapted to receive a wireless signal and controlling the light or vibration output of the application module (11) at least in part according to the received wireless signal; and
a battery module (13), including a battery (131) electrically connected to the application module (11) and the main control module (12) to supply power to the application module (11) and the main control module (12),
wherein the application module (11), main control module (12), and battery module (13) in each of the plurality of wireless signal receivers (1) are pairwise electrically detachably connected to each other via a respective connector.

13. The wireless transmission system of claim 12, where:
the application module (11) further comprises a housing (410) enclosing the light emitter (411) or vibrator (413);
the main control module (12) further comprises a housing (420) enclosing the radio; and
the battery module (13) further comprises a housing (430) enclosing the battery (131);
wherein the housings (410, 420, 430) of the application module (11), main control module (12) and battery module (13) have substantially the same shape and size.

14. The wireless transmission system of claim 13, wherein the housings (410, 420, 430) of the application module (11), main control module (12) and battery module (13) in each of the plurality of wireless signal receivers (1) form at least a portion of a respective wristband.

15. The wireless transmission system of one of claims 12 to 14, further comprising a transmitter (5) comprising a wireless communication element (51) comprising a radio adapted to communicate with the wireless communication transmitter (121) of each of the plurality of wireless signal receivers (1).
